# EUROPÄISCHE PATENTSCHRIFT

(11) **EP 0 625 938 B1**
(45) Veröffentlichungstag und Bekanntmachung des Hinweises auf die Patenterteilung: **12.06.1996**
(21) Anmeldenummer: 93903093.8
(22) Anmeldetag: 10.02.1993
(51) Int. Cl.: B29B 9/06, B29B 17/00

(54) **VORRICHTUNG ZUM GRANULIEREN VON KUNSTSTOFFEN**
DEVICE FOR GRANULATING PLASTICS
DISPOSITIF POUR LA GRANULATION DE MATIERES PLASTIQUES

(30) Priorität: 10.02.1992 AT 217/92
(43) Veröffentlichungstag der Anmeldung: 30.11.1994
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9300016
(87) Internationale Veröffentlichungsnummer: WO9315892

(56) Entgegenhaltungen:
- EP-A- 0 373 372
- AT-A- 375 867
- DE-A- 1 629 719
- DE-A- 4 028 558
- PATENT ABSTRACTS OF JAPAN vol. 8, no. 227 (M-332)(1664) 18. Oktober 1984 & JP-A-59 109 307 (MATSUSHITA DENKO) 25. Juni 1984
- DATABASE WPIL Section Ch, Week 8944, 13. Dezember 1989 Derwent Publications Ltd., London, GB; Class A31, AN 89-322191/44 & SU-A-1452682 (KHIMTEKSTILMASH) 23. Januar 1989

## Beschreibung

Die Erfindung bezieht sich auf eine Vorrichtung zum Granulieren von Kunststoffen, insbesondere thermisch instabilen hochviskosen Kunststoffen, wie Polyvinylchlorid oder Polyvinylidenchlorid, mit zumindest einem umlaufenden Granuliermesser, das vor Austrittsöffnungen für das Kunststoffmaterial umläuft, durch die das plastifizierte Kunststoffmaterial mittels einer in einem Gehäuse unmittelbar vor den Austrittsöffnungen gelagerten, durch einen Antrieb verdrehten Plastifizierschnecke hindurchgedrückt wird, wobei das Kunststoffmaterial diese Austrittsöffnungen mit einer in Axialrichtung der Plastifizierschnecke gerichteten Bewegungskomponente durchsetzt und mit einer Kühleinrichtung für die vom Granuliermesser abgeschlagenen Kunststoffkörner.

Die bisher bekannten Vorrichtungen dieser Art sehen zumeist ein Granuliergehäuse vor, in welches das Austrittsende eines Schneckenextruders mit einer die Kunststoffstränge erzeugenden Düsenplatte mündet. Am anderen Stirnende wird der Schneckenextruder befüllt und mittels einer über die Befüllungsstelle hinausragenden Verlängerung der Schneckenwelle angetrieben. Die im Granuliergehäuse abgeschlagenen Körner werden in der Regel mittels eines in den Messerbereich gerichteten Kühlwassers gekühlt und zusammen mit dem abströmenden Kühlwasser abgeführt. Solche Konstruktionen sind nachteilig bei solchen Anlagen, welche zur Verarbeitung empfindlicher Kunststoffe gedacht sind, insbesondere solcher Kunststoffe, welche thermisch instabil sind und bei längeren Verweilzeiten im heißen Bereich zum Abbau der Molekülketten neigen. Beispiele für solche empfindliche Kunststoffsorten sind Polyvinylchlorid oder Polyvinylidenchlorid. Die längeren Verweilzeiten ergeben sich durch die Umlenkungen im Strom des verarbeiteten Kunststoffmaterials, welches ja in zur Längserstreckung der Schnecke normaler Richtung zugeführt werden muß, sowie durch die mit solchen Umlenkungen verbundenen Stauräume und Reibungen, sowie die die Verweilzeit erhöhenden Fließkanäle.

Ein weiterer Nachteil besteht darin, daß sich solche im Bereich des Eintrittsendes der Schnecke angetriebene Schneckenextruder dort nicht anwenden lassen, wo es erwünscht wäre, die Schnecke am Stirnende in im wesentlichen axialer Richtung zu befüllen, also z.B. bei Aufbereitungsanlagen für Recycling-Ware, wo das Schneckengehäuse in radialer Richtung an eine Austrittsöffnung eines Behälters angeschlossen ist, in welchem die Zerkleinerung des Kunststoffmateriales mittels umlaufender Messer erfolgt.

Es ist auch bekannt (EP-A 373.372), eine in einen Einfülltrichter hineinragende Schnecke zum Transport des zu plastifizierenden Kunststoffmateriales in eine Plastifizierkammer zu benutzen, in welcher das Kunststoffmaterial durch umlaufende Preßflügel plastifiziert und durch am Umfang der Plastifizierkammer angeordnete Austrittsöffnungen in radialer Richtung aus der Plastifizierkammer hinausgedrückt wird. Außerhalb dieser Austrittsöffnungen laufen Granuliermesser um, die an einer die Antriebswelle der Transportschnecke umgebenden Habe befestigt sind. Diese Ausführungsform ist nachteilig, weil das in die Plastifizierkammer eingeführte Kunststoffmaterial in sehr kurzer Zeit plastifiziert werden muß, wenn gewährleistet werden soll, daß das plastifizierte Material durch die Austrittsöffnungen hindurchgedrückt werden kann. Dies bedingt einen hohen Energieaufwand für den Antrieb der Preßflügel. Weiters ist nachteilig, daß die am Außenumfang der von einem Lochring gebildeten Austrittsöffnungen umlaufenden Messer samt ihren Halterungen eine beträchtliche Masse bilden, zu deren Bewegung wiederum erhöhter Energieaufwand erforderlich ist.

Die Erfindung setzt sich zur Aufgabe, eine Vorrichtung der eingangs geschilderten Art so zu verbessern, daß der mit geringem Energieaufwand verarbeitete Kunststoff geschont und die Anwendbarkeit der Vorrichtung vielseitiger gestaltet wird. Insbesondere soll es möglich sein, eine Vorrichtung der eingangs geschilderten Art auch bei den beschriebenen Recycling-Aufbereitungsanlagen einsetzen zu können. Die Erfindung löst diese Aufgabe dadurch, daß die Austrittsöffnungen an das antriebsseitige Stirnende der spitzengetriebenen Plastifizierschnecke anschließen und daß der Antrieb für die Plastifizierschnecke eine zu diesem antriebsseitigen Stirnende koaxial angeordnete Welle aufweist, welche von der zwischen dem Antrieb und den Austrittsöffnungen angeordneten Umlaufbahn des Messers umgeben ist und einen von der Plastifizierschnecke gesonderten Bauteil bildet, der mit dem Stirnende der Plastifizierschnecke drehschlüssig und lösbar gekuppelt ist. Zum Unterschied von der eingangs beschriebenen bekannten Konstruktion ist somit die Schnecke der erfindungsgemäßen Vorrichtung mit einem Spitzenantrieb versehen, d.h. an jenem Stirnende angetrieben, gegen welches die Schnecke fördert. Dadurch wird das andere, vom Austrittsende des Kunststoffmateriales abgewandte Stirnende der Schnecke frei und es kann dort problemlos das zu verarbeitende Kunststoffmaterial zugeführt werden. Es ist also durchaus möglich, die erfindungsgemäße Vorrichtung mit dem Schneckengehäuse zumindest annähernd radial an einen Aufbereitungsbehälter für das Kunststoffmaterial anzuschließen und auf diese Weise die Fliehkraft für die Befüllung der Schnecke auszunützen, welche Fliehkraft von den im Aufbereitungsbehälter umlaufenden Messern auf das zerkleinerte Kunststoffmaterial ausgeübt wird. Außerdem ergibt sich eine gedrängte Bauweise mit kurzen Fließwegen für das plastifizierte Kunststoffmaterial, so daß die Verweilzeiten dieses Materiales im heißen Bereich vergleichsweise gering sind und daher die Gefahr thermischer Schädigungen des verarbeiteten Kunststoffmateriales verringert wird. Da die Austrittsöffnungen unmittelbar vor dem Stirnende der Schnecke liegen, ist ihre größte Entfernung von der Schneckenachse nicht größer als der Schneckendurchmesser, so daß auch die Messer nur diesen Höchstabstand von der Schneckenachse aufweisen müssen. Dadurch ergibt sich für die Messer eine im Vergleich zur zuvor beschriebenen bekannten Konstruktion wesentlich verringerte bewegte Masse und dadurch ein geringerer Energieaufwand. Außerdem läßt sich die Plastifizierung des zu bearbeitenden Kunststoffgutes mittels der Plastifizierschnecke energiesparender und schonender durchführen als mit den Preßflügeln der bekannten Konstruktion. Die lösbare Verbindung zwischen Antriebswelle und Plastifizierschnecke erleichtert den Ausbau der Schnecke zwecks Reinigung oder bei Verschleiß.

Für die Granulierung von Polymerfasersträngen ist es bekannt (SU-A-1,452.682), diese Polymerfaserstränge in sich in axialer Richtung erstreckende Umfangsnuten eines Schneckengehäuses einzubringen und dort mittels einer Transportschnecke zu einem um die Schneckenachse umlaufenden Granuliermesser zu transportieren, wobei dieses Granuliermesser am stirnseitigen Ende des Schneckengehäuses um die Achse der Schneckenwelle umläuft. Hier findet keine Plastifizierung des zugeführen Kunststoffmateriales statt, so daß die durch die Erfindung gelösten Probleme hier nicht auftreten.

Im Rahmen der Erfindung wäre es denkbar, die Schnecke gegen eine gesonderte Lochplatte fördern zu lassen, an deren Austrittsseite das Messer umläuft. Eine solche gesonderte Lochplatte kann jedoch im Rahmen der Erfindung dadurch vermieden werden, daß die Austrittsöffnungen von der Schnecke sowie ihrem Gehäuse begrenzt sind. Die Schnecke bildet daher mit ihrem Gehäuse zusammen zugleich die Düsenkanäle, durch welche das von der Schnecke zugeführte Kunststoffmaterial extrudiert wird.

Eine bevorzugte Ausführungsform der Erfindung besteht hiebei darin, daß die Welle als Hohlwelle ausgebildet ist und mittels einer Schraube im Stirnende der Schnecke zugschlüssig und axial einstellbar fixiert und mittels zumindest eines Keiles oder einer Verzahnung auf drehschlüssige Mitnahme mit der Schnecke gekuppelt ist. Dies bildet eine besonders einfache Bauweise, welche es erlaubt, die axiale Lage der Schnecke durch Verdrehung der Schraube genau einzustellen, um zu gewährleisten, daß das Stirnende der Schnecke und das Stirnende ihres Gehäuses exakt in einer gemeinsamen Ebene liegen, sodaß das Messer die aus den Düsenkanälen austretenden Kunststoffstränge exakt abschneiden kann.

Wie bereits erwähnt, ist es zweckmäßig, die Austrittsöffnungen zwischen der Schnecke und ihrem Gehäuse anzuordnen. Hier bestehen im wesentlichen zwei grundsätzliche Varianten: Es wäre denkbar, die Austrittsöffnungen bzw. die sie bildenden Kanäle in den Innenmantel des Schneckengehäuses einzuarbeiten. Derart ausgebildete Kanäle würden stillstehen und es könnte das Messer mit der Schnecke umlaufen. In der Regel wird jedoch die Umlaufgeschwindigkeit der Schnecke nicht hoch genug sein, um den gewünschten Kornabschlag durch das Messer zu erzielen. Es ist daher im Rahmen der Erfindung günstiger, wenn die Austrittsöffnungen von Längskanälen am Umfang eines Flansches am antriebsseitigen Stirnende der Schnecke gebildet sind, wobei der Flansch an die letzten Gänge der Schnecke unmittelbar anschließt und an der Innenfläche des Gehäuses anliegt, und wobei das Messer auf der Welle drehbar gelagert ist und mit einem Antrieb zur Relativverdrehung in Bezug auf die Welle verbunden ist. Derart gebildete, zu den Austrittsöffnungen führende Längskanäle laufen also mit der Schnecke um, was den gesonderten Antrieb für das Messer erforderlich macht, was aber gegenüber der eingangs geschilderten bekannten Konstruktion keinen Nachteil bedeutet, da auch dort ein gesonderter Antrieb für das Messer erforderlich ist. Der eigene Messerantrieb macht es problemlos möglich, dem Messer die gewünschte Drehzahl zu geben und somit einen einwandfreien Granulatabschlag sicherzustellen. Eine bevorzugte Weiterbildung der zuletzt beschriebenen Konstruktion besteht im Rahmen der Erfindung darin, daß das Messer am der Schnecke benachbarten Stirnende einer auf der Welle drehbar gelagerten Hülse befestigt ist, an welcher der Antrieb für das Messer, vorzugsweise mittels eines Zahnriemens, angreift.

Es erleichtert die Reinigung der zu den Austrittsöffnungen führenden Kanäle, wenn im Rahmen der Erfindung der die Längskanäle abdeckende Abschnitt des Gehäuses einen vom restlichen Gehäuse getrennten, mit diesem lösbar, vorzugsweise mittels Schrauben, verbundenen Ring bildet. Auf diese Weise können die zu den Austrittsöffnungen führenden Längskanäle freigelegt werden, ohne daß hiezu die Schnecke ausgebaut werden muß.

Gemäß einer Weiterbildung der Erfindung ist die Kühleinrichtung von einem Gebläse gebildet, das zugleich eine Fördereinrichtung für die abgeschlagenen Granulatteilchen bildet und einen, vorzugsweise radial zur Welle angeordneten, Luftkanal, der zum Messer führt, sowie einen vom Messer zu einer Sammelstation für das Granulat führenden , vorzugsweise ebenfalls radial zur Welle angeordneten, Abfuhrkanal hat. Eine solche Luftkühlung für die abgeschlagenen Teilchen reicht für empfindliche Kunststoffsorten, deren Extrusionstemperatur nicht so hoch ist, in den meisten Fällen aus. Die Luftkühlung ist im Betrieb billiger als die Wasserkühlung und erspart gesonderte Einrichtungen für die Trocknung der Granulatteilchen. Ein gesondertes Granuliergehäuse kann im Rahmen der Erfindung eingespart werden, wenn der Luftkanal und der Abfuhrkanal an der einen Seite von einer, das Gehäuse der Schnecke haltenden Wand und auf der gegenüberliegenden Seite von einer mit der Welle oder der auf sie aufgesetzten Hülse verbundenen Scheibe begrenzt sind.

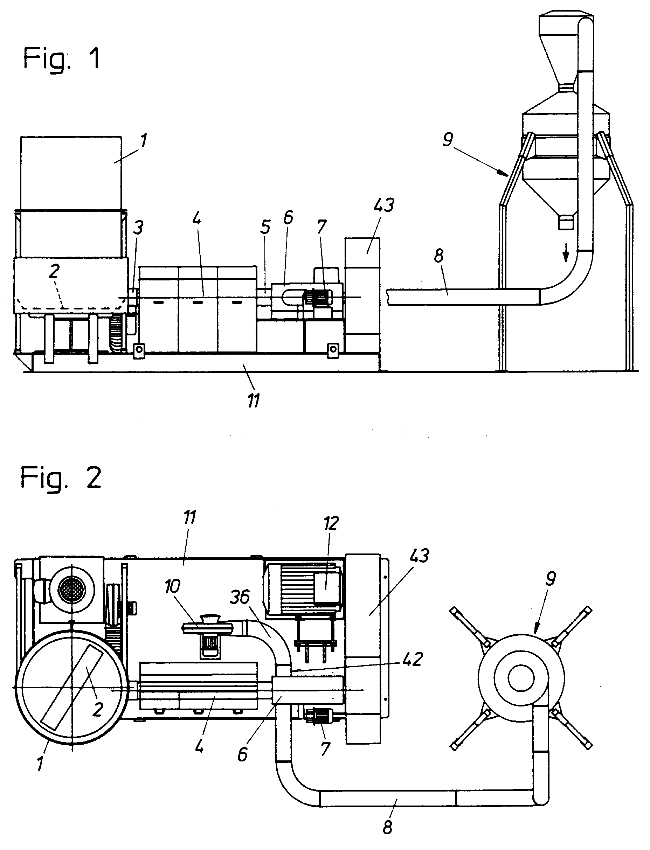

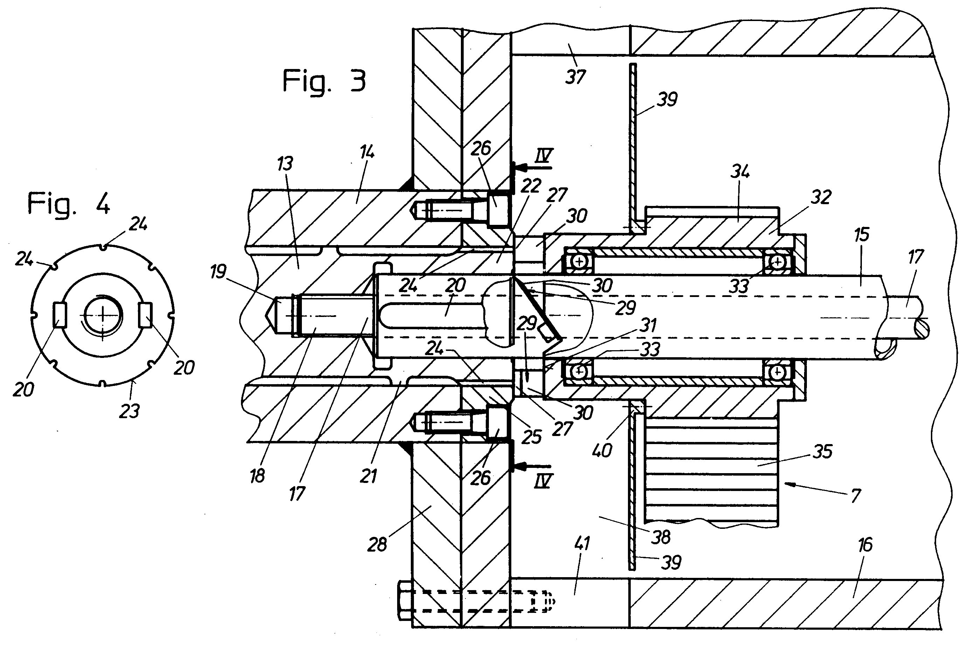

In der Zeichnung ist der Erfindungsgegenstand anhand eines Ausführungsbeispieles schematisch veranschaulicht. Fig.1 zeigt eine mit der erfindungsgemäßen Vorrichtung versehene Anlage zum Granulieren in Seitenansicht. Fig.2 ist eine Draufsicht zu Fig.1. Fig.3 zeigt in größerem Maßstab das mit dem Schneckenantrieb versehene Stirnende der Schnecke im Schnitt. Fig.4 ist eine Stirnansicht in Richtung des Pfeiles IV-IV des Stirnendes der Schnecke.

Die Anlage nach den Fig.1 und 2 hat einen Aufnahmebehälter 1 für das zu verarbeitende Kunststoffmaterial, welches in den Behälter 1 von oben eingefüllt wird. Im Bodenbereich des Behälters 1 läuft ein Messer 2 um die vertikale Behälterachse um und zerkleinert das im Behälter 1 befindliche Kunststoffmaterial. Das zerkleinerte Material wird durch eine Öffnung in der Wand des Aufnahmebehälters 1 in die Einzugsöffnung eines radial zum Behälter 1 angeordneten Schneckenextruders 3 gedrückt, durch welchen das Material plastifiziert wird. Dem Schneckenextruder 3 können Heiz- und bzw. oder Kühlzonen 4 zugeordnet sein. Mittels der Heizzonen läßt sich die gewünschte Prozeßtemperatur erzielen. Kommt es zu einer Überschreitung derselben, z.B. durch Einfluß von Friktionswärme, so kann mittels der Kühlzonen die gewünschte Temperatur sichergestellt werden. Das aus diesen Einrichtungen 4 herausragende Stirnende 5 des Schneckenextruders 3 führt in einen Granulierkopf 6, in welchem ein durch einen Granulierantrieb 7 angetriebenes Granuliermesser die Körner abschlägt. Die abgeschlagenen Körner werden vom Granulierkopf 6 durch eine Verrohrung 8 in eine Absackstation 9 abgeführt. Den Transport besorgt ein Luftstrom, welcher von einem Fördergebläse 10 erzeugt wird. Auf der Grundplatte 11 der Anlage ist auch der Antrieb 12 für den Schneckenextruder 3 angeordnet, welcher das spitzenseitige Ende der Schnecke antreibt.

In Fig.3 ist dieses Ende der Schnecke genauer dargestellt. Die Schnecke 13 ist in einem zylindrischen Gehäuse 14 gelagert, welches an die erwähnte Austrittsöffnung des Aufnahmebehälters 1 angeschlossen ist. Der Antrieb 12 für die Schnecke treibt eine Welle 15 an, welche koaxial zur Schnecke 13 im Gestell 16 der Vorrichtung gelagert ist. Diese Welle 15 ist als Hohlwelle ausgebildet, die von einer Stange 17 durchsetzt ist, welche an ihrem der Schnecke 13 zugewandten Ende ein Gewinde trägt, welches eine Schraube 18 bildet, die in eine entsprechende Gewindebohrung 19 der Schnecke 13 einschraubbar ist. Am anderen Ende ist die Stange 17 in beliebiger Weise an der Hohlwelle 15 abgestützt, z.B. mittels eines am Ende der Hohlwelle 15 anliegenden nicht dargestellten Flansches. Dies ergibt nicht nur eine lösbare zugschlüssige Verbindung zwischen der Schnecke 13 und der Welle 15, sondern auch die Möglichkeit, die Lage der Schnecke 13 in axialer Richtung durch Verdrehung der Stange 17 in einfacher und leicht durchführbarer Weise zu justieren, soferne nur die Welle 15, z.B. in ihrem Antrieb 12, in Längsrichtung unverschiebbar gehalten ist. Hierdurch kann sichergestellt werden, daß das Stirnende der Schnecke 13 und das Stirnende des Gehäuses 14 stets genau in einer gemeinsamen Ebene liegen. Die drehschlüssige Mitnahme zwischen der Antriebswelle 15 und der Schnecke 13 und zugleich die relative Längsverschiebbarkeit dieser Bauteile wird durch zwei Keile 20 oder eine Verzahnung gesichert. Die Schnecke 13 hat einen an ihre letzten Gänge 21 unmittelbar anschließenden Flansch 22, der an seinem Umfang 23 mit mehreren, voneinander in gleichmäßigen Abständen verteilten, sich in Achsrichtung der Schnecke 13 erstreckenden Längs- oder Spiralkanälen 24 versehen ist, die unmittelbar an die Plastifizierschnecke 13 anschließen. Diese Kanäle 24 sind durch einen Ring 25 abgedeckt, der einen Abschnitt des Schneckengehäuses 14 bildet und am Grundkörper des Schneckengehäuses mittels Schrauben 26 lösbar befestigt ist, um einen einfachen Austausch der Schnecke 13 bzw. des Ringes 25 bei Verschleiß zu ermöglichen und um die Längskanäle 24 zwecks Reinigung leicht freilegen zu können, ohne die Schnecke 13 ausbauen zu müssen. Die Längskanäle 24 bilden mit ihren an der äußeren Stirnseite des Ringes 25 liegenden Enden die Austrittsöffnungen 27, durch welche das mittels der Schnecke 13 zugeführte plastifizierte Kunststoffmaterial aus den Längs- oder Spiralkanälen 24 ausgedrückt wird. Das Stirnende des Gehäuses 14 ist zusammen mit dem Ring 25 durch eine vertikale Wand 28 des Gestelles 16 gehalten. Vor den Austrittsöffnungen 27 laufen ein oder mehrere Granuliermesser 29 mit Schneiden 30 um, welche mit ihrer zwischen dem Antrieb der Schnecke 13 und den Austrittsöffnungen 27 liegenden Bahn die Welle 15 konzentrisch umgeben und an der Stirnseite 31 einer Hülse 32 befestigt sind, die mittels Wälzlagern 33 auf der Welle 15 drehbar gelagert ist. Die Hülse 32 trägt außen einen Zahnkranz 34, der mittels eines Zahnriemens 35 vom Granulierantrieb 7 (Fig.1) angetrieben wird. Die Drehzahl der Hülse 32 und damit des Messers 29 ist wesentlich höher als jene der Welle 15, so daß eine genügende Relativgeschwindigkeit zwischen den umlaufenden Austrittsöffnungen 27 und dem ebenfalls umlaufenden Messer 29 erzielt wird. Zweckmäßig läuft das Messer 29 in der zur Drehrichtung der Schnecke 13 entgegengesetzten Richtung um.

Die Abfuhr der von den Schneiden 30 der Messer 29 abgeschlagenen Granulatteilchen erfolgt mittels des vom Fördergebläse 10 (Fig.2) erzeugten Luftstromes, welcher zugleich für eine ausreichende Kühlung der abgeschlagenen Kunststoffteilchen sorgt. Hierzu führt vom Fördergebläse 10 ein Rohrkrümmer 36 (Fig.2) für die geförderte kalte Luft, für welche ein Kühlaggregat vorgesehen sein kann, zu einer seitlichen Eintrittsöffnung 37 (Fig.3) des Gestelles 16. Die Öffnung 37 führt in einen Ringraum 38, welcher auf der einen Seite durch die Wand 28 des Gestelles 16 begrenzt wird, auf der anderen Seite durch eine Scheibe 39, welche an einer Abkröpfung 40 der Hülse 32 befestigt ist und mit dieser umläuft. Auf der der Eintrittsöffnung 37 gegenüberliegenden Seite des Gestelles 16 liegt eine Austrittsöffnung 41, durch welche die Förderluft zusammen mit den von ihr geförderten Granulatkörnern in die Verrohrung 8 (Fig.2) eintritt. Das Gestell 16 hat im Bereich der Welle 15 zweckmäßig Kreisquerschnitt, so daß sich für die durch die Öffnung 37 eintretende und durch die Öffnung 41 austretende Förderluft möglichst wenig tote Ecken bilden und somit für eine sichere Abfuhr der abgeschlagenen Kunststoffteilchen gesorgt wird. Eine solche Kühleinrichtung 42 (Fig.2) hat sich bewährt, zumal ja gerade bei der Verarbeitung von Polyvinylchlorid keine allzu hohen Temperaturen und Klebrigkeiten auftreten.

Der Antrieb 12 für die Schnecke 13 kann mit einem Regelgetriebe 43 (Fig.2) versehen sein, um die Drehzahl der Schnecke 13 nach Wunsch einstellen zu können.

## Patentansprüche

1. Vorrichtung zum Granulieren von Kunststoffen, insbesondere thermisch instabilen, hochviskosen Kunststoffen, wie Polyvinylchlorid oder Polyvinylidenchlorid, mit zumindest einem umlaufenden Granuliermesser (29), das vor Austrittsöffnungen (27) für das Kunststoffmaterial umläuft, durch die das plastifizierte Kunststoffmaterial mittels einer in einem Gehäuse (14) unmittelbar vor den Austrittsöffnungen (27) gelagerten, durch einen Antrieb (12) verdrehten Plastifizierschnecke (13) hindurchgedrückt wird, wobei das Kunststoffmaterial diese Austrittsöffnungen (27) mit einer in Axialrichtung der Plastifizierschnecke (13) gerichteten Bewegungskomponente durchsetzt, und mit einer Kühleinrichtung (42) für die vom Granuliermesser (29) abgeschlagenen Kunststoffkörner, dadurch gekennzeichnet, daß die Austrittsöffnungen (27) an das antriebsseitige Stirnende der spitzengetriebenen Plastifizierschnecke (13) anschließen und daß der Antrieb (12) für die Plastifizierschnecke (13) eine zu diesem antriebsseitigen Stirnende koaxial angeordnete Welle (15) aufweist, welche von der zwischen dem Antrieb (12) und den Austrittsöffnungen (27) angeordneten Umlaufbahn des Granuliermessers (29) umgeben ist und einen von der Plastifizierschnecke (13) gesonderten Bauteil bildet, der mit dem Stirnende der Plastifizierschnecke (13) drehschlüssig und lösbar gekuppelt ist.

2. Vorrichtung nach Anspruch 1, dadurch gekennzeichnet, daß die Austrittsöffnungen (27) von der Plastifizierschnecke (13) sowie ihrem Gehäuse (14) begrenzt sind.

3. Vorrichtung nach Anspruch 1 oder 2, dadurch gekennzeichnet, daß die Welle (15) als Hohlwelle ausgebildet ist und mittels einer Schraube (18) im Stirnende der Plastifizierschnecke (13) zugschlüssig und axial einstellbar fixiert und mittels zumindest eines Keiles (20) oder einer Verzahnung auf drehschlüssige Mitnahme mit der Plastifizierschnecke (13) gekuppelt ist.

4. Vorrichtung nach Anspruch 2 oder 3, dadurch gekennzeichnet, daß die Austrittsöffnungen (27) vom Längs- oder Spiralkanälen (24) am Umfang eines Flansches (22) am antriebsseitigen Stirnende der Plastifizierschnecke (13) gebildet sind, wobei der Flansch (22) am die letzten Gänge (21) der Plastifizierschnecke (13) unmittelbar anschließt und am der Innenfläche des Gehäuses (14) anliegt und wobei das Granuliermesser (29) auf der Welle (15) drehbar gelagert ist und mit einem Antrieb (7) zur Relativverdrehung in Bezug auf die Welle (15) verbunden ist.

5. Vorrichtung nach Anspruch 4, dadurch gekennzeichnet, daß das Granuliermesser (29) am der Plastifizierschnecke (13) benachbarten Stirnende einer auf der Welle (15) drehbar gelagerten Hülse (32) befestigt ist, am welcher der Antrieb (7) für das Granuliermesser (29), vorzugsweise mittels eines Zahnriemens (35), angreift.

6. Vorrichtung nach Anspruch 4 oder 5, dadurch gekennzeichnet, daß der die Längskanäle (24) abdeckende Abschnitt des Gehäuses (14) einem vom Gehäuse (14) getrennten, mit diesem lösbar, vorzugsweise mittels Schrauben (26), verbundenen Ring (25) bildet.

7. Vorrichtung nach einem der Ansprüche 1 bis 6, dadurch gekennzeichnet, daß die Kühleinrichtung (42) von einem Fördergebläse (10) für die abgeschlagenen Granulatteilchen gebildet ist und daß dieses Fördergebläse (10) über eine, vorzugsweise radial zur Welle (15) angeordnete Eintrittsöffnung (37) für die Förderluft an das die Welle (15) umgebende Gestell (16) angeschlossen ist, wobei eine, vorzugsweise ebenfalls radial zur Welle (15) angeordnete, Austrittsöffnung (41) für die abgeschlagenen Granulatteilchen zur Abfuhr dieser Teilchen zu einer Sammelstation, z.B. einer Absackstation (9), vorgesehen ist.

8. Vorrichtung nach Anspruch 7, dadurch gekennzeichnet, daß die Eintrittsöffnung (37) und die Austrittsöffnung (41) für die Kühlluft zu beiden Seiten der Welle (15) angeordnet sind und mit einem das Granuliermesser (29) umgebenden Ringraum (38) in Verbindung stehen, der auf seiner einen Stirnseite von einer das Gehäuse (14) der Plastifizierschnecke (13) haltenden Wand (28) und auf der gegenüberliegenden Stirnseite von einer mit der Welle (15) oder der auf sie aufgesetztem Hülse (32) verbundenen Scheibe (39) begrenzt wird.

## Claims

1. A device for granulating plastics, in particular heat-labile, highly viscous plastics such as polyvinyl chloride or polyvinylidene chloride, having at least one rotating granulating knife (29) which rotates in front of outlets (27) for the plastics material through which the plasticized plastics material is pushed by means of a plasticizing worm screw (13) which is mounted in a housing (14) so as to be directly before the outlets (27) and is rotated by means of a drive (12), the plastics material passing through these outlets (27) with a component of motion directed in the axial direction of the plasticizing worn screw (13), and having a cooling device (42) for the plastics grains struck off by the granulating knife (29), characterised in that the outlets (27) are adjacent to the front end - located at the side nearest the drive - of the tip-driven plasticizing worm screw (13), and in that the drive (12) for the plasticizing worm screw (13) has a shaft (15) which is arranged coaxial with this front end located at the side nearest the drive, is encircled by the granulating knife circular path arranged between the drive (12) and the outlets (27) and forms a part which is separate from the plasticizing worm screw (13) and is coupled to the front end of the plasticizing worm screw (13) in a rotationally locked and detachable manner.

2. A device in accordance with Claim 1, characterised in that the outlets (27) are defined by the plasticizing worm screw (13) and its housing (14).

3. A device in accordance with Claim 1 or 2, characterised in that the shaft (15) is in the form of a hollow shaft, is secured in the front end of the plasticizing worm screw (13) by means of a screw (18) in a tensionally locked, axially adjustable manner and is coupled to the plasticizing worm screw (13) by means of at least one wedge (20) or toothing so as to carried along therewith in a rotationally locked manner.

4. A device in accordance with Claim 2 or 3, characterised in that the outlets (27) are formed by longitudinal or helical channels (24) at the circumference of a flange (22) at the plasticizing worm screw front end located at the side nearest the drive, the flange (22) being directly adjacent to the last threads (21) of the plasticizing worm screw (13) and contacting with the inner surface of the housing (14), and the granulating knife (29) being rotatably mounted on the shaft (15) and being connected to a drive (7) for relative rotation in relation to the shaft (15).

5. A device in accordance with Claim 4, characterised in that the granulating knife (29) is secured to the front end - adjacent to the plasticizing worm screw (13) - of a sleeve (32) rotatably mounted on the shaft (15), the drive (7) for the granulating knife (29) acting upon this sleeve (32), preferably by means of a toothed belt (35).

6. A device in accordance with Claim 4 or 5, characterised in that the portion of the housing (14) covering the longitudinal channels (24) forms a ring (25) which is separate from the housing (14) and is detachably connected thereto, preferably by means of screws (26).

7. A device in accordance with any one of Claims 1 to 6, characterised in that the cooling device (42) is formed by a delivery fan (10) for the struck-off granular material particles, and in that this delivery fan (10) is attached to the frame (16) surrounding the shaft (15) via an inlet (37) for the delivery air which is preferably arranged radially to the shaft (15), an outlet (41) for the struck-off granular material particles which is preferably also arranged radially to the shaft (15) being provided for delivery of these particles to a collecting station, e.g. a sack-filling station (9).

8. A device in accordance with Claim 7, characterised in that the inlet (37) and the outlet (41) for the cooling air are arranged at either side of the shaft (15) and are connected to an annular chamber (38) surrounding the granulating knife (29), this annular chamber (38) being bounded at one of its end faces by a wall (28) supporting the housing (14) of the plasticizing worm screw (13) and at the opposite end face by a disc (39) connected to the shaft (15) or to the sleeve (32) mounted on the latter.

## Revendications

1. Dispositif pour la granulation de matières plastiques, en particulier de matières plastiques très visqueuses thermiquement instables, comme le polychlorure de vinyle ou le chlorure de polyvinylidène, doté d'au moins un couteau de granulation (29) rotatif qui tourne devant des orifices de sortie (27) de la matière plastique, à travers lesquels la matière plastique plastifiée est poussée au moyen d'une vis de plastification (13) montée rotative directement devant les orifices de sortie (27) dans un carter (14) et entrainée par un dispositif d'entraînement (12), la matière plastique traversant lesdits orifices de sortie (27) avec une composante du mouvement dans la direction axiale de la vis de plastification (13), et doté d'un dispositif de refroidissement (42) pour les grains de matière plastique sectionnés par le couteau de granulation (29), caractérisé en ce que les orifices de sortie (27) affleurent à l'extrémité frontale, côté entraînement, de la vis de plastification (13) entraînée à son extrémité et en ce que le dispositif d'entraînement (12) de la vis de plastification (13) présente un arbre (15) prévu coaxialement à ladite extrémité frontale située côté entraînement, la trajectoire circulaire du couteau de granulation (29) entre le dispositif d'entraînement (12) et les orifices de sortie (27) entourant ledit arbre, qui forme un élément constitutif indépendant de la vis de plastification (13) et est couplé en rotation de façon amovible à l'extrémité frontale de la vis de plastification (13).

2. Dispositif selon la revendication 1, caractérisé en ce que les orifices de sortie (27) sont délimités par la vis de plastification (13) ainsi que par le carter (14) de celle-ci.

3. Dispositif selon la revendication 1 ou 2, caractérisé en ce que l'arbre (15) est un arbre creux fixé solidaire en traction et axialement réglable au moyen d'une vis (18) sur l'extrémité frontale de la vis de plastification (13) et est couplé en rotation à la vis de plastification (13) au moyen d'au moins une clavette (20) ou d'une denture.

4. Dispositif selon la revendication 2 ou 3, caractérisé en ce que les orifices de sortie (27) sont formés par des canaux longitudinaux ou spiralés (24) à la périphérie d'une bride (22), à l'extrémité frontale, côté entraînement, de la vis de plastification (13), la bride (22) se raccordant directement aux derniers filets (21) de la vis de plastification (13) et étant en contact avec la face interne du carter (14), le couteau de granulation (29) étant monté à libre rotation sur l'arbre (15) et raccordé à un dispositif d'entraînement (7) pour effectuer un mouvement de rotation relativement à l'arbre (15).

5. Dispositif selon la revendication 4, caractérisé en ce que le couteau de granulation (29) est fixé sur l'extrémité frontale, située à proximité de la vis de plastification (13), d'une douille (32) montée rotative sur l'arbre (15) et sur laquelle le dispositif d'entraînement (7) du couteau de granulation (29) s'engage, de préférence au moyen d'une courroie crantée (35).

6. Dispositif selon la revendication 4 ou 5, caractérisé en ce que la portion du carter (14) qui recouvre les canaux longitudinaux (24) forme une bague (25) séparée du carter (14) et reliée à celui-ci de façon amovible, de préférence au moyen de vis (26).

7. Dispositif selon l'une quelconque des revendications 1 à 6, caractérisé en ce que le dispositif de refroidissement (42) est constitué par une soufflerie convoyeuse (10) pour les granulés sectionnés et en ce que ledit convoyeur (10) est raccordé au châssis (16) entourant l'arbre (15) par un orifice d'entrée (37) de l'air convoyeur, disposé de préférence radialement à l'arbre (15), un orifice de sortie (41) des granulés sectionnés, disposé de préférence également radialement à l'arbre (15), étant prévu pour amener lesdits granulés à un poste collecteur, par exemple un poste d'ensachage (9).

8. Dispositif selon la revendication 7, caractérisé en ce que l'orifice d'entrée (37) et l'orifice de sortie (41) pour l'air de refroidissement sont ménagés de part et d'autre de l'arbre (15) et communiquent avec un espace annulaire (38) entourant le couteau de granulation (29), ledit espace annulaire étant délimité à l'un des ses bords droits par une paroi (28) supportant le carter (14) de la vis de plastification (13) et au bord droit opposé par un plateau (39) raccordé à l'arbre (15) ou à la douille (32) rapportée sur ledit arbre.
